# EUROPÄISCHE PATENTSCHRIFT

(11) **EP 2 573 640 B1**
(45) Veröffentlichungstag und Bekanntmachung des Hinweises auf die Patenterteilung: **18.06.2014**
(21) Anmeldenummer: 11182832.3
(22) Anmeldetag: 26.09.2011
(51) Int. Cl.: G05D 19/02, H02J 9/06, H02P 6/24, H02P 25/02, H02P 27/08, H02M 1/32

(54) **Federbelasteter Antrieb mit aktiver Rückspeisung in Gleichspannungskreis**
Spring-loaded drive with active recovery in direct current circuit
Entraînement à ressort doté d'une récupération active dans le circuit de tension continue

(43) Veröffentlichungstag der Anmeldung: 27.03.2013
(73) Patentinhaber: Siemens Aktiengesellschaft, 80333 München (DE)
(72) Erfinder: Schoop, Daniel, 6300 Zug (CH); Huwiler, Adrian, 6038 Honau (CH); Reichmuth, Ronald, 8840 Einsiedeln (CH)

(56) Entgegenhaltungen:
- EP-A2- 1 655 165
- AT-A4- 507 558
- DE-A1-102005 031 514
- DE-A1-102009 007 562
- JP-A- 1 165 974
- JP-A- 11 065 679
- US-A1- 2010 007 301

## Beschreibung

Die vorliegende Erfindung betrifft einen elektrischen Antrieb,
- wobei der Antrieb einen Motor und eine Motoranschaltung für den Motor aufweist,
- wobei die Motoranschaltung einen Gleichspannungskreis und eine Schalteinrichtung aufweist,
- wobei im Gleichspannungskreis ein Stützkondensator angeordnet ist,
- wobei der Gleichspannungskreis zur Einspeisung von Energie in den Stützkondensator mit einem Versorgungsnetz verbunden ist und der Motor über die Schalteinrichtung an den Stützkondensator anschaltbar ist,
- wobei der Motor einen Stator und einen relativ zum Stator drehbar gelagerten Rotor aufweist,
- wobei der Rotor mit einer Federeinrichtung verbunden ist, mittels derer der Rotor in dem Fall, dass er aus einer Ruhelage ausgelenkt ist, mit einer rücktreibenden Kraft beaufschlagt ist,
- wobei eine die Schalteinrichtung ansteuernde Steuereinrichtung für den Motor in dem Fall, dass die Einspeisung von Energie in den Stützkondensator aus dem Versorgungsnetz erfolgt, Schaltelemente der Schalteinrichtung in Abhängigkeit von einer der Steuereinrichtung von außen vorgegebenen Sollauslenkung des Rotors derart ansteuert, dass eine Istauslenkung des Rotors der Sollauslenkung nachgeführt wird.

Aus der WO 2005/119 898 A2 ist ein elektrischer Antrieb der eingangs genannten Art bekannt.

Federbelastete Antriebe werden oftmals als Antriebe für Ventile und Klappen verwendet, um zu gewährleisten, dass das Ventil bzw. die Klappe bei einem Ausfall des Versorgungsnetzes in eine definierte Stellung überführt wird.

Wenn die Feder den Rotor zurücktreibt, können negative Effekte auftreten. Insbesondere kann es zu einem mechanischen Anprall des rückgestellten Elements kommen, der im Extremfall zu mechanischen Schäden führen kann. Weiterhin wird durch das Zurücktreiben des Rotors elektrische Energie erzeugt, die von der Motoranschaltung aufgenommen und verkraftet werden muss.

Bei der WO 2005/119 898 A2 ist der Motor als bürstenloser Gleichstrommotor ausgebildet. In der WO 2005/119 898 A2 wird zur Vermeidung der oben genannten Probleme vorgeschlagen, zwei von drei Wicklungen des Motors mittels des Umrichters pulsweitenmoduliert kurzzuschließen und dadurch den Rotor drehzahlbegrenzt in seine Ruhelage zu überführen.

Die Lehre der WO 2005/119 898 A2 löst die oben genannten Probleme nur teilweise. Insbesondere wird zwar ein Anschlagen des Ventils bzw. der Klappe vermieden. Es entsteht jedoch ein hoher Kurzschlussstrom, der vom Motor und von der Schalteinrichtung verkraftet werden muss. Weiterhin müssen die im Motor auftretenden Spannungen von der Schalteinrichtung verkraftet werden.

Aus US 201/0007301 A1 ist ein Antrieb bekannt, bei dem die rücktreibende Feder von Antrieben der eingangs genannten Art durch eine Sicherheitsschaltung mit einem kapazitiven Energiespeicher ersetzt worden ist. In dem Fall, dass die Einspeisung von Energie aus dem Versorgungsnetz ausfällt, bewegt der Elektromotor die angetriebene Klappe mit einer parametrisierbaren wenn auch typisch erhöhten Geschwindigkeit in ihre Sicherheitsstellung.

AT 507558 A4 zeigt eine Rundwebmaschine zur Herstellung von schlauchförmigen Geweben, in der Elektromotoren die Drehung von Schussbändchenspulen antreiben und in einem generatorischen Betrieb abbremsen können. Jeder Elektromotor wird mittels eines Auslenkungssensors an einer gefederten Bändchenumlenkeinrichtung auf eine gewünschte Spannung des Schussbändchens hin geregelt. Bei solchem Abbremsen im Normalbetrieb lädt der Elektromotor einen Kondensator, Akkumulator oder desgleichen auf, welcher die Regeleinrichtung für eine drahtlose Kommunikation autark mit Energie versorgt.

Die Aufgabe der vorliegenden Erfindung besteht daher darin, einen elektrischen Antrieb der oben genannten Art derart weiterzuentwickeln, dass die Probleme des Standes der Technik vollständig beseitigt werden.

Die Aufgabe wird durch einen elektrischen Antrieb mit den Merkmalen des Anspruchs 1 gelöst. Vorteilhafte Ausgestaltungen des erfindungsgemäßen elektrischen Antriebs sind Gegenstand der abhängigen Ansprüche 2 bis 9.

Erfindungsgemäß ist vorgesehen, einen elektrischen Antrieb der eingangs genannten Art dadurch auszugestalten,
- dass die Steuereinrichtung über den Stützkondensator mit Energie versorgbar ist und
- dass die Steuereinrichtung in dem Fall, dass im aus der Ruhelage ausgelenkten Zustand des Rotors die Einspeisung von Energie in den Stützkondensator aus dem Versorgungsnetz ausfällt, selbsttätig die Sollauslenkung auf die Ruhelage setzt und die Schaltelemente der Schalteinrichtung derart ansteuert, dass der Motor zumindest zu Beginn des Rücktreibens durch die Federeinrichtung über die Schaltelemente der Schalteinrichtung Energie in den Stützkondensator einspeist.

Aufgrund der Versorgung der Steuereinrichtung mit Energie über den Stützkondensator ist die Steuereinrichtung als Verbraucher an den Stützkondensator angeschaltet. Die Steuereinrichtung wirkt daher durch ihren Stromverbrauch einem zu großen Spannungsanstieg am Stützkondensator entgegen. Aufgrund des Ansteuerns der Schaltelemente der Schalteinrichtung kann der rückgespeiste Strom über die Schaltelemente der Schalteinrichtung selbst - im Gegensatz zu intrinsisch vorhandenen, nur in geringem Umfang stromtragfähigen Freilaufdioden der Schaltelemente - fließen. Dadurch wird die Schalteinrichtung elektrisch entlastet. Aufgrund des Weiterbetriebs der Steuereinrichtung und der nunmehr gegebenen Abweichung der Istauslenkung des Rotors von der - neu gesetzten - Sollauslenkung erfolgt im Wesentlichen ein gebremstes Überführen des Rotors in die Ruhelage, wie im Normalbetrieb auch.

Es ist möglich, in dem Fall, dass die Einspeisung von Energie in den Stützkondensator aus dem Versorgungsnetz ausfällt, eine spezielle Art und Weise der Ansteuerung der Schaltelemente der Schalteinrichtung vorzusehen. Einfacher und daher bevorzugt ist jedoch, dass die Steuereinrichtung die Schaltelemente der Schalteinrichtung in dem Fall, dass im ausgelenkten Zustand des Rotors die Einspeisung von Energie aus dem Versorgungsnetz ausfällt, auf die gleiche Weise ansteuert wie in dem Fall, dass die Einspeisung von Energie aus dem Versorgungsnetz erfolgt und die Sollauslenkung des Rotors von außen auf die Ruhelage gesetzt wird. Durch diese Vorgehensweise ist keinerlei Änderung im Steuerverhalten der Steuereinrichtung erforderlich. Es muss lediglich die Sollauslenkung auf den Wert 0 gesetzt werden.

Vorzugsweise ist vorgesehen, dass die Steuereinrichtung die Schaltelemente der Schalteinrichtung in dem Fall, dass im ausgelenkten Zustand des Rotors die Einspeisung von Energie aus dem Versorgungsnetz ausfällt, derart ansteuert, dass der Rotor drehzahlgeregelt oder drehzahlbegrenzt in die Ruhelage verfahren wird.

Der Motor kann insbesondere als mehrphasiger Motor ausgebildet sein. In diesem Fall umfassen die Schaltelemente der Schalteinrichtung in der Regel obere und untere Schaltelemente, wobei jede Phase des Motors über je ein jeweiliges oberes Schaltelement an ein oberes Potential des Stützkondensators und über je ein jeweiliges unteres Schaltelement an ein unteres Potential des Stützkondensators anschaltbar ist. In dem Fall, dass die Einspeisung von Energie aus dem Versorgungsnetz erfolgt, werden für jede Phase das jeweilige obere und das jeweilige untere Schaltelement von der Steuereinrichtung im Gegentakt angesteuert. Erfindungsgemäß wird diese Art der Ansteuerung auch in dem Fall, dass im ausgelenkten Zustand des Rotors die Einspeisung von Energie aus dem Versorgungsnetz ausfällt, beibehalten.

Es ist möglich, die Rückspeisung von elektrischer Energie in den Stützkondensator in dem Fall, dass die Einspeisung von Energie in den Stützkondensator aus dem Versorgungsnetz ausfällt, stets vorzunehmen. Vorzugsweise jedoch ermittelt die Steuereinrichtung in dem Fall, dass im ausgelenkten Zustand des Rotors die Einspeisung von Energie aus dem Versorgungsnetz ausgefallen ist, während des Einspeisens von Energie in den Stützkondensator einen Energiezustand des Gleichspannungskreises. Sie ist dadurch in der Lage, die Ansteuerung der Schaltelemente der Schalteinrichtung einzustellen, wenn der Energiezustand des Gleichspannungskreises unter eine Minimalenergie sinkt.

Zum Erfassen des Energiezustands des Gleichspannungskreises kann die Steuereinrichtung beispielsweise einen über die Schalteinrichtung in den Gleichspannungskreis oder den Stützkondensator eingespeisten Strom erfassen. Alternativ kann die Steuereinrichtung zum Erfassen des Energiezustands des Gleichspannungskreises eine am Stützkondensator anstehende Spannung erfassen.

Wie bereits erwähnt, dient der Antrieb oftmals als Ventil- oder Klappenantrieb. Vorzugsweise ist daher der Rotor direkt oder über ein Getriebe mit einer Klappe oder einem Ventil verbunden.

Der Motor kann insbesondere als bürstenloser Gleichstrommotor ausgebildet sein.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: einen elektrischen Antrieb,
- FIG 2: einen Motor und eine Schalteinrichtung,
- FIG 3: Schaltdiagramme,
- FIG 4: ein Ablaufdiagramm und
- FIG 5: ein weiteres Ablaufdiagramm.

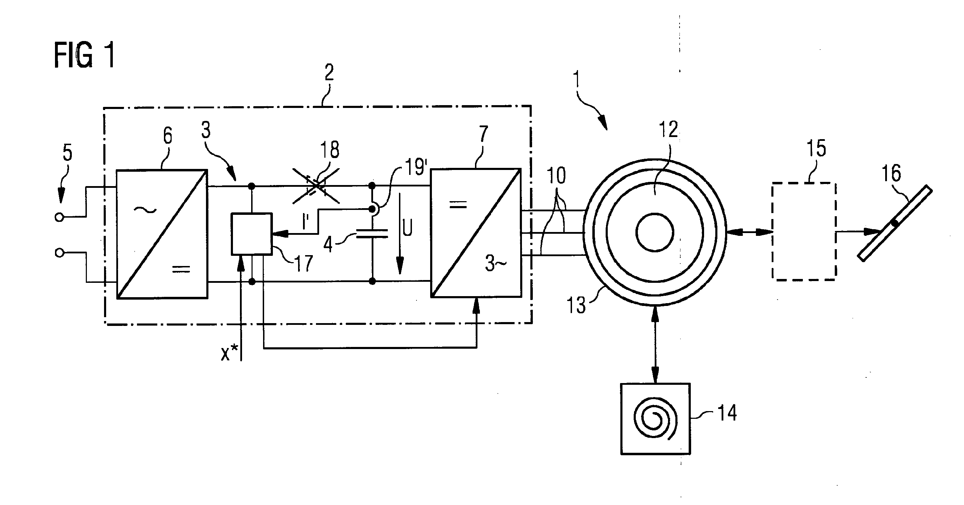

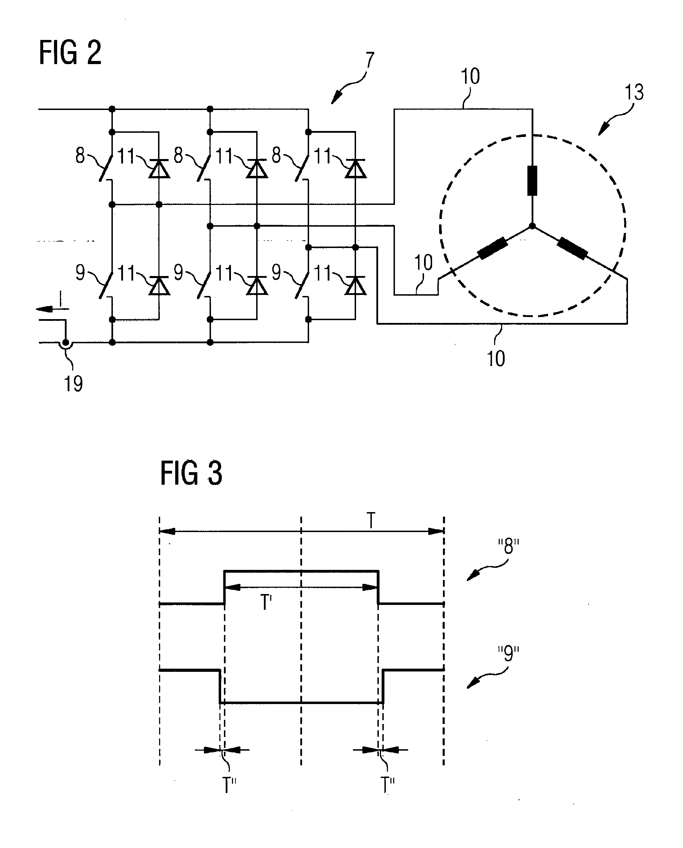

Gemäß FIG 1 weist ein elektrischer Antrieb einen Motor 1 und eine Motoranschaltung 2 (Motorcontrolschaltung 2) auf. Der Motor 1 kann nach Bedarf ausgebildet sein. Beispielsweise kann der Motor 1 als permanent erregte Synchronmaschine ausgebildet sein. Vorzugsweise ist der Motor 1 jedoch entsprechend der Darstellung in FIG 2 als bürstenloser Gleichstrommotor ausgebildet, insbesondere als mehrphasiger bürstenloser Gleichstrommotor. In analoger Weise kann der Motor 1 nach Bedarf als Innen- oder - entsprechend der Darstellung in FIG 1 - als Außenläufermotor ausgebildet sein. Die Motoranschaltung 2 dient der Versorgung des Motors 1 mit elektrischer Energie und der Steuerung des Motors 1.

Die Motoranschaltung 2 weist einen Gleichspannungskreis 3 auf. Im Gleichspannungskreis 3 ist - unter anderem - ein Stützkondensator 4 angeordnet.

Der Gleichspannungskreis 3 ist zur Einspeisung von Energie in den Stützkondensator 4 mit einem Versorgungsnetz 5 verbunden. Beispielsweise kann entsprechend der Darstellung von FIG 1 ein Gleichrichter 6 vorhanden sein, welcher den Gleichspannungskreis 3 mit dem einphasigen oder dreiphasigen öffentlichen Spannungsnetz (Nennspannung im einphasigen Fall 100 V, 110 V oder 230 V, Netzfrequenz 50 Hz oder 60 Hz) verbindet. Es sind auch andere Spannungsversorgungen möglich, beispielsweise 24 V Gleichspannung und unter Umständen sogar Kleinspannungen unter 24 V.

Die Motoranschaltung 2 weist weiterhin eine Schalteinrichtung 7 auf. Über die Schalteinrichtung 7 ist der Motor 1 an den Stützkondensator 4 anschaltbar. Die Schalteinrichtung 7 weist zu diesem Zweck gemäß FIG 2 Schaltelemente 8, 9 auf. Der Motor 1 ist in der Regel als mehrphasiger Motor ausgebildet. Üblicherweise umfassen die Schaltelemente 8, 9 der Schalteinrichtung 7 für jede Phase 10 des Motors 1 jeweils ein oberes Schaltelement 8 und ein unteres Schaltelement 9. Über das jeweilige obere Schaltelement 8 ist die jeweilige Phase 10 des Motors 1 an ein oberes Potential des Stützkondensators 4 anschaltbar. In analoger Weise ist die jeweilige Phase 10 über das jeweilige untere Schaltelement 9 an ein unteres Potential des Stützkondensators 4 anschaltbar.

Die Schaltelemente 8, 9 sind in der Regel als Halbleiter-Schaltelemente ausgebildet, beispielsweise als MOSFETs oder als IGBTs. Sie weisen intrinsische Freilaufdioden 11 auf. Die Freilaufdioden 11 sind herstellungstechnisch unvermeidbar. Es handelt sich bei den Freilaufdioden 11 also nicht um von den Schaltelementen 8, 9 separate Bauelemente, die prinzipiell entfallen könnten, sondern sie sind vielmehr unvermeidbar in jedem Fall vorhanden.

Der Motor 1 weist gemäß FIG 1 einen Stator 12 und einen Rotor 13 auf. Der Rotor 13 ist relativ zum Stator 12 drehbar gelagert. Durch entsprechendes Anschalten einer am Stützkondensator 4 anstehenden Spannung U (nachfolgend Zwischenkreisspannung U genannt) kann daher auf den Rotor 13 ein entsprechendes Moment ausgeführt werden, so dass der Rotor 13 gedreht wird.

Gemäß FIG 1 ist der Rotor 13 mit einer Federeinrichtung 14 verbunden. Die Federeinrichtung 14 wird beim Drehen des Rotors 13 ge- und entspannt. Die Federeinrichtung 14 weist einen Zustand auf, in dem sie (vollständig) entspannt ist oder zwar nicht vollständig entspannt ist, aber - beispielsweise aufgrund eines Anschlags - auf den Rotor 13 keine rücktreibende Kraft mehr ausübt. Die korrespondierende Stellung des Rotors 13 entspricht einer Ruhelage des Rotors 13. In jeder anderen Auslenkung des Rotors 13 ist der Rotor 13 mittels der Federeinrichtung 14 mit einer rücktreibenden Kraft beaufschlagt, d. h. mit einer Kraft, die den Rotor 13 in die Ruhelage zurücktreibt.

Der Rotor 13 kann beispielsweise - sei es direkt, sei es über ein in FIG 1 gestrichelt angedeutetes Getriebe 15 - mit einer Klappe 16 oder einem Ventil 16 verbunden sein.

Die Motoranschaltung 2 weist gemäß FIG 1 weiterhin eine Steuereinrichtung 17 für den Motor 1 auf. Die Steuereinrichtung 17 dient der Ansteuerung der Schalteinrichtung 7, insbesondere der Schaltelemente 8, 9. Sie wird über den Stützkondensator 4 mit elektrischer Energie versorgt. Die Steuereinrichtung 17 ist also entweder zwischen dem Stützkondensator 4 und der Schalteinrichtung 7 angeordnet oder aber entsprechend der Darstellung von FIG 1 zwar dem Stützkondensator 4 vorgeordnet, wobei im letztgenannten Fall jedoch keine Entkopplung der Steuereinrichtung 17 vom Stützkondensator 4 durch eine entsprechend angeordnete Entkopplungsdiode 18 erfolgt. Die Entkopplungsdiode 18 ist aus diesem Grund in FIG 1 nur gestrichelt eingezeichnet und durchgestrichen.

In der Regel erfolgt - selbstverständlich - eine Einspeisung von elektrischer Energie in den Stützkondensator 4 aus dem Versorgungsnetz 5. Dieser Zustand wird nachfolgend als Normalbetrieb bezeichnet. Es ist jedoch möglich, dass das Versorgungsnetz 5 ausfällt. Dieser Zustand wird nachfolgend als Notbetrieb bezeichnet.

Im Normalbetrieb steuert die Steuereinrichtung 17 die Schaltelemente 8, 9 der Schalteinrichtung 7 an. Die Ansteuerung erfolgt in Abhängigkeit von einer Sollauslenkung x* des Rotors 13. Die Sollauslenkung x* wird der Steuereinrichtung 17 im Normalbetrieb gemäß FIG 1 von außen vorgegeben, beispielsweise über eine nicht dargestellte Eingabeeinrichtung von einem Menschen oder von einer ebenfalls nicht dargestellten übergeordneten Steuereinrichtung.

Die Steuereinrichtung 17 steuert die Schaltelemente 8, 9 derart an, dass eine Istauslenkung des Rotors 13 der Sollauslenkung x* nachgeführt wird. Die entsprechende Ansteuerung der Schaltelemente 8, 9 der Schalteinrichtung 7 ist Fachleuten allgemein bekannt. Insbesondere steuert die Steuereinrichtung 17 die oberen und die unteren Schaltelemente 8, 9 in der Regel pulsweitenmoduliert und vor allem im Gegentakt an. Bezogen auf eine beliebige der Phasen 10 erfolgt also - siehe FIG 3 - eine Ansteuerung in Taktzyklen T, wobei innerhalb des jeweiligen Taktzyklus T während eines Anschaltzeitraums T' der jeweiligen Phase 10 das jeweilige obere Schaltelement 8 auf "leitend" gesteuert wird. Das korrespondierende untere Schaltelement 9 wird während des Anschaltzeitraums T' auf "gesperrt" gesteuert. Umgekehrt wird außerhalb des Anschaltzeitraums T' das obere Schaltelement 8 von der Steuereinrichtung 17 auf "gesperrt" gesteuert. Das untere Schaltelement 9 hingegen wird außerhalb des Anschaltzeitraums T' auf "leitend" gesteuert. Eine Ausnahme gilt nur während sehr kurzer Umschaltzeiträume T", in denen zur Vermeidung eines Kurzschlusses sowohl das obere als auch das untere Schaltelement 8, 9 der jeweiligen Phase 10 gesperrt sind.

Aufgrund des Umstands, dass der Rotor 13 mit der Federeinrichtung 14 verbunden ist, muss der Rotor 13 im Normalbetrieb permanent mit einem Moment beaufschlagt werden, um die rücktreibende Kraft der Federeinrichtung 14 zu kompensieren. Eine Ausnahme gilt nur, wenn die Sollauslenkung x* mit der Ruhelage des Rotors 13 korrespondiert.

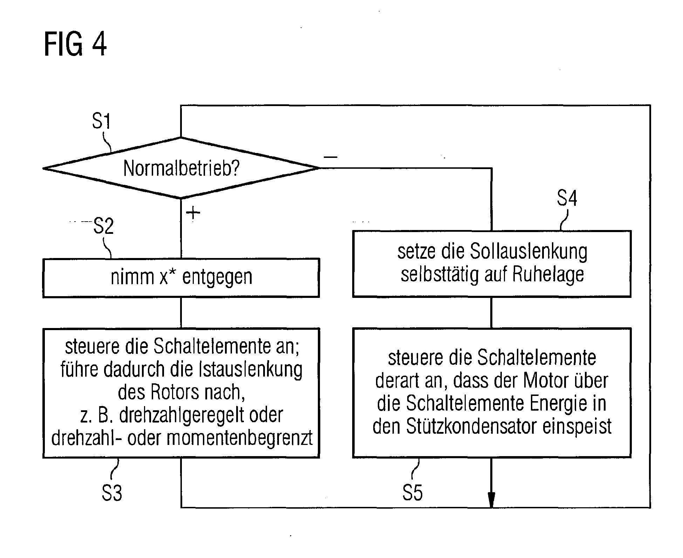

Wenn die Energieversorgung aus dem Versorgungsnetz 5 ausfällt, d. h. wenn der Notbetrieb eintritt, kann der Motor 1 nur noch kurze Zeit aus dem Stützkondensator 4 mit elektrischer Energie versorgt werden. Danach gewinnt die rücktreibende Kraft der Federeinrichtung 14 die Oberhand. Für diesen Fall muss die Steuereinrichtung 17 durch entsprechendes Ansteuern der Schalteinrichtung 7 gewährleisten, dass kritische Betriebszustände des Antriebs vermieden werden. Die Steuereinrichtung 17 ist daher derart ausgebildet - beispielsweise programmiert -, dass sie die nachstehend in Verbindung mit FIG 4 erläuterte Betriebsweise realisiert:
In einem Schritt S1 prüft die Steuereinrichtung 17, ob die Energieversorgung des Gleichspannungskreises 3 aus dem Versorgungsnetz 5 erfolgt. Je nach Ergebnis der Überprüfung geht die Steuereinrichtung 17 zu einem Schritt S2 oder zu einem Schritt S4 über.

Im Schritt S2 nimmt die Steuereinrichtung 17 die Sollauslenkung x* des Rotors 13 entgegen. In einem Schritt S3 steuert die Steuereinrichtung 17 die Schaltelemente 8, 9 der Schalteinrichtung 7 an, so dass die Istauslenkung des Rotors 13 der Sollauslenkung x* nachgeführt wird. Das Nachführen der Istauslenkung kann beispielsweise drehzahlgeregelt, drehzahlbegrenzt oder momentenbegrenzt erfolgen. Die entsprechenden Regelschemata und die entsprechende Ermittlung der Ansteuerschemata für die Schaltelemente 8, 9 der Schalteinrichtung 7 sind Fachleuten bekannt.

Wenn die Energieversorgung aus dem Versorgungsnetz 5 hingegen ausfällt, geht die Steuereinrichtung 17 zum Schritt S4 über. Im Schritt S4 setzt die Steuereinrichtung 17 selbsttätig die Sollauslenkung x* auf die Ruhelage. Weiterhin steuert die Steuereinrichtung 17 die Schaltelemente 8, 9 der Schalteinrichtung 7 in einem Schritt S5 derart an, dass der Motor 1 über die Schaltelemente 8, 9 der Schalteinrichtung 7 Energie in den Stützkondensator 4 einspeist. Die Steuereinrichtung 17 steuert daher insbesondere auch im Notbetrieb die oberen und die unteren Schaltelemente 8, 9 phasenweise im Gegentakt an.

Die exakte Art der Überführung des Rotors 13 in die Ruhelage kann im Rahmen des Schrittes S5 nach Bedarf bestimmt sein. Beispielsweise kann die Steuereinrichtung 17 analog zum Schritt S3 die Schaltelemente 8, 9 der Schalteinrichtung 7 derart ansteuern, dass der Rotor 13 drehzahlgeregelt oder drehzahlbegrenzt in die Ruhelage verfahren wird.

Die in den Stützkondensator 4 eingespeiste Energie erhöht im Notbetrieb zunächst die Zwischenkreisspannung U. Da jedoch die Steuereinrichtung 17 - und zwar vollständig, d. h. im gleichen Umfang wie im Normalbetrieb - über den Stützkondensator 4 mit elektrischer Energie versorgt wird, wirkt die Steuereinrichtung 17 durch ihren Stromverbrauch einem zu starken Anstieg der Zwischenkreisspannung U entgegen.

Die Art und Weise, auf welche die entsprechenden Ansteuersignale für die Schaltelemente 8, 9 im Rahmen des Schrittes S5 ermittelt werden müssen, ist Fachleuten als solche bekannt. Insbesondere kann die Steuereinrichtung 17 die Ansteuersignale für die Schaltelemente 8, 9 auf die gleiche Weise ermitteln wie im Normalbetrieb, wenn dort die Sollauslenkung x* von außen auf die Ruhelage gesetzt wird. Unter Umständen kann daher der Schritt S5 sogar vollständig entfallen. In diesem Fall wird vom Schritt S5 aus zum Schritt S3 übergegangen.

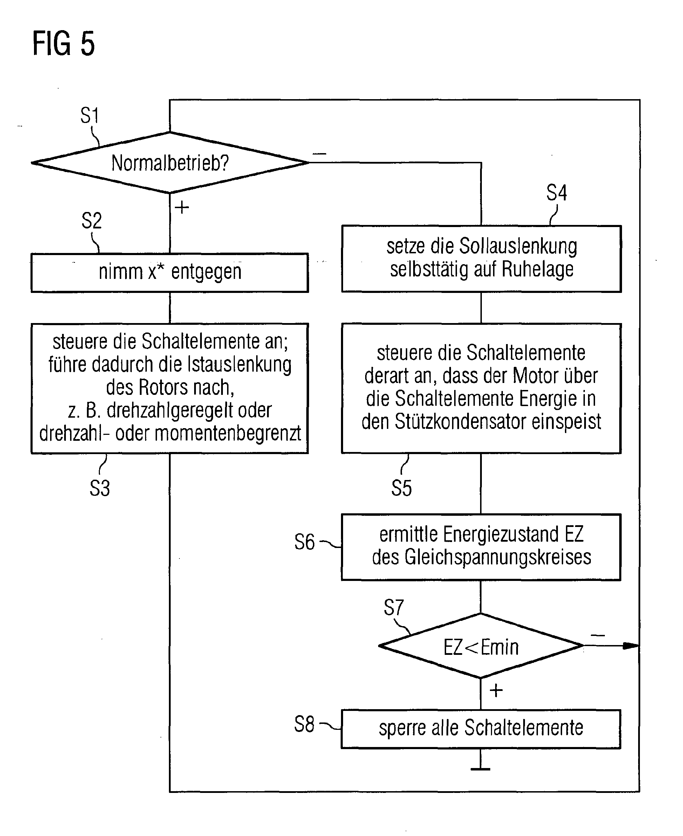

Bei der obenstehend in Verbindung mit FIG 4 erläuterten Vorgehensweise speist der Motor 1 im Notbetrieb nicht nur zu Beginn des Rücktreibens des Rotors 13, sondern stets Energie in den Stützkondensator 4 ein. Diese Vorgehensweise ist ohne Weiteres möglich. Oftmals führt es jedoch zu besseren Ergebnissen, die Vorgehensweise von FIG 4 gemäß FIG 5 zu modifizieren.

Gemäß FIG 5 sind - zusätzlich zu den Schritten S1 bis S5 - weitere Schritte S6 bis S8 vorhanden.

Im Schritt S6 ermittelt die Steuereinrichtung 17 einen Energiezustand EZ des Gleichspannungskreises 3. Aufgrund des Umstands, dass der Schritt S6 dem Schritt S5 nachgeordnet ist, wird der Schritt S6 zu einem Zeitpunkt ausgeführt, zu dem vom Motor 1 über die Schalteinrichtung 7 Energie in den Stützkondensator 4 eingespeist wird.

Zur Ermittlung des Energiezustands EZ des Gleichspannungskreises 3 kann die Steuereinrichtung 17 beispielsweise über eine entsprechend angeordnete Strommesseinrichtung 19 (siehe FIG 2) den von der Schalteinrichtung 7 in den Gleichspannungskreis 3 eingespeisten Strom I erfassen. Alternativ oder zusätzlich kann die Steuereinrichtung 17 über eine entsprechend angeordnete Strommesseinrichtung 19' (siehe FIG 1) den in den Stützkondensator 4 selbst eingespeisten Strom I' erfassen. Alternativ oder zusätzlich kann die Steuereinrichtung 17 gemäß FIG 1 die am Stützkondensator 4 anstehende Zwischenkreisspannung U erfassen.

Im Schritt S7 prüft die Steuereinrichtung 17, ob der ermittelte Energiezustand EZ des Gleichspannungskreises 3 oberhalb einer Minimalenergie Emin liegt. Je nach Ergebnis der Prüfung geht die Steuereinrichtung 17 entweder zum Schritt S1 oder zum Schritt S8 über. Falls die Steuereinrichtung 17 zum Schritt S8 übergeht, sperrt sie im Schritt S8 alle Schaltelemente 8, 9 der Schalteinrichtung 7.

Die Ausgestaltung gemäß FIG 5 bewirkt somit, dass im Notbetrieb nur zu Beginn des Rücktreibens des Rotors 13 elektrische Energie in den Stützkondensator 4 eingespeist wird. Wenn der Energiezustand EZ des Gleichspannungskreises 3 unter die Minimalenergie Emin sinkt, stellt die Steuereinrichtung 17 hingegen die Ansteuerung der Schaltelemente 8, 9 ein.

Die vorliegende Erfindung weist signifikante Vorteile auf. Insbesondere ergibt sich ein vereinfachtes Steuerverfahren für die Schaltelemente 8, 9. Weiterhin können die Schaltelemente 8, 9 und auch der Stützkondensator 4 kleiner dimensioniert werden als im Stand der Technik. Weiterhin ist eine Überlastung der Freilaufdioden 11 ausgeschlossen. Schließlich können mechanische Beanspruchungen des Motors 1, des Getriebes 15 und der Klappe 16 bzw. des Ventils 16 vermieden werden.

Obwohl die Erfindung im Detail durch das bevorzugte Ausführungsbeispiel näher illustriert und beschrieben wurde, so ist die Erfindung nicht durch die offenbarten Beispiele eingeschränkt. Andere Variationen können vom Fachmann hieraus abgeleitet werden, ohne den Schutzumfang der Erfindung zu verlassen.

## Patentansprüche

1. Elektrischer Antrieb,
- wobei der Antrieb einen Motor (1) und eine Motoranschaltung (2) für den Motor (1) aufweist,
- wobei die Motoranschaltung (2) einen Gleichspannungskreis (3) und eine Schalteinrichtung (7) aufweist,
- wobei im Gleichspannungskreis (3) ein Stützkondensator (4) angeordnet ist,
- wobei der Gleichspannungskreis (3) zur Einspeisung von Energie in den Stützkondensator (4) mit einem Versorgungsnetz (5) verbunden ist und der Motor (1) über die Schalteinrichtung (7) an den Stützkondensator (4) anschaltbar ist,
- wobei der Motor (1) einen Stator (12) und einen relativ zum Stator (12) drehbar gelagerten Rotor (13) aufweist,
- wobei der Rotor (13) mit einer Federeinrichtung (14) verbunden ist, mittels derer der Rotor (13) in dem Fall, dass er aus einer Ruhelage ausgelenkt ist, mit einer rücktreibenden Kraft beaufschlagt ist,
- wobei eine die Schalteinrichtung (7) ansteuernde Steuereinrichtung (17) für den Motor (1) in dem Fall, dass die Einspeisung von Energie in den Stützkondensator (4) aus dem Versorgungsnetz (5) erfolgt, Schaltelemente (8, 9) der Schalteinrichtung (7) in Abhängigkeit von einer der Steuereinrichtung (17) von außen vorgegebenen Sollauslenkung (x*) des Rotors (13) derart ansteuert, dass eine Istauslenkung des Rotors (13) der Sollauslenkung (x*) nachgeführt wird,
- wobei die Steuereinrichtung (17) über den Stützkondensator (4) mit Energie versorgbar ist,
- wobei die Steuereinrichtung (17) in dem Fall, dass im aus der Ruhelage ausgelenkten Zustand des Rotors (13) die Einspeisung von Energie in den Stützkondensator (4) aus dem Versorgungsnetz (5) ausfällt, selbsttätig die Sollauslenkung (x*) auf die Ruhelage setzt und die Schaltelemente (8, 9) der Schalteinrichtung (7) derart ansteuert, dass der Motor (1) zumindest zu Beginn des Rücktreibens durch die Federeinrichtung (14) über die Schaltelemente (8, 9) der Schalteinrichtung (7) Energie in den Stützkondensator (4) einspeist.

2. Elektrischer Antrieb nach Anspruch 1,
**dadurch gekennzeichnet,**
**dass** die Steuereinrichtung (17) die Schaltelemente (8, 9) der Schalteinrichtung (7) in dem Fall, dass im ausgelenkten Zustand des Rotors (13) die Einspeisung von Energie aus dem Versorgungsnetz (5) ausfällt, auf die gleiche Weise ansteuert wie in dem Fall, dass die Einspeisung von Energie aus dem Versorgungsnetz (5) erfolgt und die Sollauslenkung (x*) des Rotors (13) von außen auf die Ruhelage gesetzt wird.

3. Elektrischer Antrieb nach Anspruch 1 oder 2,
**dadurch gekennzeichnet ,**
**dass** die Steuereinrichtung (17) die Schaltelemente (8, 9) der Schalteinrichtung (7) in dem Fall, dass im ausgelenkten Zustand des Rotors (13) die Einspeisung von Energie aus dem Versorgungsnetz (5) ausfällt, derart ansteuert, dass der Rotor (13) drehzahlgeregelt oder drehzahlbegrenzt in die Ruhelage verfahren wird.

4. Elektrischer Antrieb nach Anspruch 1, 2 oder 3,
**dadurch gekennzeichnet ,**
- **dass** der Motor (1) als mehrphasiger Motor (1) ausgebildet ist,
- **dass** die Schaltelemente (8, 9) der Schalteinrichtung (7) obere und untere Schaltelemente (8, 9) umfassen,
- **dass** jede Phase (10) des Motors (1) über je ein jeweiliges oberes Schaltelement (8) an ein oberes Potential des Stützkondensators (4) und über je ein jeweiliges unteres Schaltelement (9) an ein unteres Potential des Stützkondensators (4) anschaltbar ist und
- **dass** für jede Phase (10) das jeweilige obere und das jeweilige untere Schaltelement (8, 9) sowohl in dem Fall, dass die Einspeisung von Energie aus dem Versorgungsnetz (5) erfolgt, als auch in dem Fall, dass im ausgelenkten Zustand des Rotors (13) die Einspeisung von Energie aus dem Versorgungsnetz (5) ausfällt, von der Steuereinrichtung (17) im Gegentakt angesteuert werden.

5. Elektrischer Antrieb nach einem der obigen Ansprüche,
**dadurch gekennzeichnet ,**
**dass** die Steuereinrichtung (17) in dem Fall, dass im ausgelenkten Zustand des Rotors (13) die Einspeisung von Energie aus dem Versorgungsnetz (5) ausgefallen ist, während des Einspeisens von Energie in den Stützkondensator (4) einen Energiezustand (EZ) des Gleichspannungskreises (3) ermittelt und die Ansteuerung der Schaltelemente (8, 9) der Schalteinrichtung (7) einstellt, wenn der Energiezustand (EZ) des Gleichspannungskreises (3) unter eine Minimalenergie (Emin) sinkt.

6. Elektrischer Antrieb nach Anspruch 1,
**dadurch gekennzeichnet,**
**dass** die Steuereinrichtung (17) zum Erfassen des Energiezustands (EZ) des Gleichspannungskreises (3) einen über die Schalteinrichtung (7) in den Gleichspannungskreis (3) oder den Stützkondensator (4) eingespeisten Strom (I, I') erfasst.

7. Elektrischer Antrieb nach Anspruch 1,
**dadurch gekennzeichnet,**
**dass** die Steuereinrichtung (17) zum Erfassen des Energiezustands (EZ) des Gleichspannungskreises (3) eine am Stützkondensator (4) anstehende Spannung (U) erfasst.

8. Elektrischer Antrieb nach einem der obigen Ansprüche,
**dadurch gekennzeichnet,**
**dass** der Rotor (13) direkt oder über ein Getriebe (15) mit einer Klappe (16) oder einem Ventil (16) verbunden ist.

9. Elektrischer Antrieb nach einem der obigen Ansprüche,
**dadurch gekennzeichnet,**
**dass** der Motor (1) als bürstenloser Gleichstrommotor (1) ausgebildet ist.

## Claims

1. Electrical drive,
- wherein the drive has a motor (1) and a motor control (2) for the motor (1),
- wherein the motor control (2) has a DC circuit (3) and a switching device (7),
- wherein a back-up capacitor (4) is arranged in the DC circuit (3),
- wherein the DC circuit (3) is linked for feeding energy into the back-up capacitor (4) with a power supply network (5) and the motor (1) is able to be connected via the switching device (7) to the back-up capacitor (4),
- wherein the motor (1) has a stator (12) and a rotor (13) supported rotatably relative to the stator (12),
- wherein the rotor (13) is linked to a spring device (14), by means of which the rotor (13), in the event of it being deflected from an idle position, has a restoring force applied to it,
- wherein a control device (17) activating the switching device (7) for the motor (1), in the event of energy being fed into the back-up capacitor (4) from the power supply network (5), controls switching elements (8, 9) of the switching device (7), depending on a required deflection (x*) of the rotor (13) prespecified to the control device (17) from outside such that an actual deflection of the rotor (13) is adjusted to the required deflection (x*),
- wherein the control device (17) is able to be supplied with energy via the back-up capacitor (4),
- wherein the control device (17), in the event that in the state in which the rotor (13) is deflected from the idle position the feeding of energy into the back-up capacitor (4) from the supply network (5) fails, automatically sets the required deflection (x*) to the idle position and activates the switching elements (8, 9) of the switching device (7) such that the motor (1), at least at the beginning of being restored by the spring device (14), feeds energy into the back-up capacitor (4) via the switching elements (8, 9) of the switching device (7).

2. Electrical drive according to claim 1,
**characterised in that**
the control device (17), in the event of the feeding of energy from the power supply network (5) failing in the deflected state of the rotor (13), activates the switching elements (8, 9) of the switching device (7) in the same way as in the case in which energy is being fed in from the power supply network (5) and the required deflection (x*) of the rotor (13) is set from outside to the idle position.

3. Electrical drive according to claim 1 or 2,
**characterised in that**
the control device (17) activates the switching elements (8, 9) of the switching device (7) in the event of the feeding of energy from the power supply network (5) failing in the deflected state of the rotor (13) such that the rotor (13) is moved into the idle position at a controlled speed or at a restricted speed.

4. Electrical drive according to claim 1, 2 or 3,
**characterised in that**
- the motor (1) is embodied as a multiphase motor (1),
- the switching elements (8, 9) of the switching device (7) comprise upper and lower switching elements (8, 9),
- each phase (10) of the motor (1) is able to be connected via a respective upper switching element (8) to an upper potential of the back-up capacitor (4) and via a respective lower switching element (9) to a lower potential of the back-up capacitor (4) and
- for each phase (10) the respective upper and the respective lower switching element (8, 9), both in the event of energy being fed in from the power supply network (5), and also in the event of the feeding of energy from the power supply network (5) failing in the deflected state of the rotor (13), are activated by the control device (17) in push-pull mode.

5. Electrical drive according to one of the above claims,
**characterised in that**
the control device (17), in the event of the feeding of energy from the power supply network (5) failing in the deflected state of the rotor (13), detects an energy state (EZ) of the DC circuit (3) during feeding of energy into the back-up capacitor (4) and sets the activation of the switching elements (8, 9) of the switching device (7) if the energy state (EZ) of the DC circuit (3) falls below a minimum energy (Emin) .

6. Electrical drive according to claim 1,
**characterised in that**
the control device (17), for detecting the energy state (EZ) of the DC circuit (3), detects a current (I, I') fed in via the switching device (7) into the DC circuit (3) or the back-up capacitor (4).

7. Electrical drive according to claim 1,
**characterised in that**
the control device (17) detects a voltage (U) present at the back-up capacitor (4) to detect the energy state (EZ) of the DC circuit (3).

8. Electrical drive according to one of the above claims,
**characterised in that**
the rotor (13) is connected directly or via a transmission (15) to a flap (16) or a valve (16).

9. Electrical drive according to one of the above claims,
**characterised in that**
the motor (1) is embodied as a brushless DC motor (1).

## Revendications

1. Entraînement électrique,
- dans lequel l'entraînement comprend un moteur (1) et une connexion de moteur (2) pour le moteur (1),
- dans lequel la connexion de moteur (2) présente un circuit à tension continue (3) et un dispositif de commutation (7),
- dans lequel dans le circuit à tension continue (3) est disposé un condensateur de support (4),
- dans lequel le circuit à tension continue (3) est relié à un réseau d'alimentation (5) pour alimenter en énergie le condensateur de support (4) et le moteur (1) peut être connecté au condensateur de support (4) via le dispositif de commutation (7),
- dans lequel le moteur (1) présente un stator (12) et un rotor (13) monté de manière rotative par rapport au stator (12),
- dans lequel le rotor (13) est relié à un dispositif à ressort (14), au moyen duquel une force de rappel est appliquée au rotor (13), dans le cas où il dévie d'une position de repos,
- dans lequel un dispositif de commande (17) commandant le dispositif de commutation (7) pour le moteur (1) commande, dans le cas où l'alimentation en énergie dans le condensateur de support (4) provient du réseau d'alimentation (5), des éléments de commutation (8, 9) du dispositif de commutation (7) en fonction d'une déviation théorique (x*) du rotor (13) prédéfinie de l'extérieur par le dispositif de commande (17), de telle sorte qu'une déviation réelle du rotor (13) est ajustée en fonction de la déviation théorique (x*),
- dans lequel le dispositif de commande (17) peut être alimenté en énergie via le condensateur de support (4),
- dans lequel le dispositif de commande (17), dans le cas où à l'état dévié de la position de repos du rotor (13) l'alimentation en énergie dans le condensateur de support (4) en provenance du réseau d'alimentation (5) diminue, règle automatiquement la déviation théorique (x*) en position de repos et commande les éléments de commutation (8, 9) du dispositif de commutation (7), de telle sorte que le moteur (1) alimente en énergie le condensateur de support (4) au moins au début du rappel par le dispositif à ressort (14) via les éléments de commutation (8, 9) du dispositif de commutation (7).

2. Entraînement électrique selon la revendication 1,
**caractérisé en ce que**
le dispositif de commande (17) commande les éléments de commutation (8, 9) du dispositif de commutation (7), dans le cas où à l'état dévié du rotor (13) l'alimentation en énergie en provenance du réseau d'alimentation (5) diminue, de la même manière que dans le cas où l'alimentation en énergie provient du réseau d'alimentation (5) et la déviation théorique (x*) du rotor (13) est réglée depuis l'extérieur en position de repos.

3. Entraînement électrique selon la revendication 1 ou 2,
**caractérisé en ce que**
le dispositif de commande (17) commande les éléments de commutation (8, 9) du dispositif de commutation (7), dans le cas où à l'état dévié du rotor (13) l'alimentation en énergie en provenance du réseau d'alimentation (5) diminue, de telle sorte que le rotor (13) passe en position de repos en régime commandé ou en régime limité.

4. Entraînement électrique selon la revendication 1, 2 ou 3,
**caractérisé en ce que**
- le moteur (1) est configuré en tant que moteur multiphasé (1),
- les éléments de commutation (8, 9) du dispositif de commutation (7) comprennent des éléments de commutation (8, 9) supérieur et inférieur,
- chaque phase (10) du moteur (1) peut être commutée via un élément de commutation supérieur (8) respectif sur un potentiel supérieur du condensateur de support (4) et via un élément de commutation inférieur (9) sur un potentiel inférieur du condensateur de support (4) et
- pour chaque phase (10) les éléments de commutation (8, 9) supérieur et inférieur respectifs aussi bien dans le cas où l'alimentation en énergie provient du réseau d'alimentation (5) que dans le cas où à l'état dévié du rotor (13) l'alimentation en énergie en provenance du réseau d'alimentation (5) diminue, sont commandés par le dispositif de commande (17) en mode différentiel.

5. Entraînement électrique selon l'une des revendications précédentes,
**caractérisé en ce que**
le dispositif de commande (17), dans le cas où à l'état dévié du rotor (13) l'alimentation en énergie en provenance du réseau d'alimentation (5) diminue, pendant l'alimentation en énergie dans le condensateur de support (4) détermine un état énergétique (EZ) du circuit à tension continue (3) et règle la commande des éléments de commutation (8, 9) du dispositif de commutation (7), lorsque l'état énergétique (EZ) du circuit à tension continue (3) passe en dessous d'une énergie minimale (Emin).

6. Entraînement électrique selon la revendication 1,
**caractérisé en ce que**
le dispositif de commande (17) détecte un courant (I, I') alimenté via le dispositif de commutation (7) dans le circuit à tension continue (3) ou le condensateur de support (4) pour la détection de l'état énergétique (EZ) du circuit à tension continue (3).

7. Entraînement électrique selon la revendication 1,
**caractérisé en ce que**
le dispositif de commande (17) détecte une tension (U) présente au niveau du condensateur de support (4) pour la détection de l'état énergétique (EZ) du circuit à tension continue (3).

8. Entraînement électrique selon l'une des revendications précédentes,
**caractérisé en ce que**
le rotor (13) est relié directement ou via une transmission (15) à un clapet (16) ou une soupape (16).

9. Entraînement électrique selon l'une des revendications précédentes,
**caractérisé en ce que**
le moteur (1) est configuré en tant que moteur à courant continu sans balais (1).
